**Europäisches Patentamt**

**European Patent Office**

**Office européen des brevets**

(19)

(11) Publication number:

**0 101 759**
**B1**

(12)                      EUROPEAN PATENT SPECIFICATION

(45) Date of publication of patent specification: **04.02.87**          (51) Int. Cl.⁴: **G 06 F 9/38**

(21) Application number: **82108062.9**

(22) Date of filing: **01.09.82**

(54) **Data processing system having branch instruction prefetching performance.**

(43) Date of publication of application:
**07.03.84 Bulletin 84/10**

(45) Publication of the grant of the patent:
**04.02.87 Bulletin 87/06**

(84) Designated Contracting States:
**DE FR GB IT**

(56) References cited:

**IBM TECHNICAL DISCLOSURE BULLETIN, vol.
25, no. 1, June 1982, page 99-101, New York
(USA); J. J. LOSQ: "Generalized history table
for branch prediction"**

(73) Proprietor: **NEC CORPORATION**
**33-1, Shiba 5-chome, Minato-ku**
**Tokyo 108 (JP)**

(72) Inventor: **Akagi, Masanobu**
**c/o Nippon Electric Co. Ltd. 33-1 Shiba Gochome**
**Minato-ku Tokyo (JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86 (DE)**

Courier Press, Leamington Spa, England.

## Description

This invention relates to a data processing system having branch instruction prefetching means, said system comprising main memory means for storing information; buffer memory means have a plurality of blocks for holding a copy of a portion of the information stored in said main memory means in each block unit; arithmetic operation control means executing instructions including a branch instruction; branch direction control memory means.

Suppose now that a group of instructions including one or more branch instructions forms an instruction sequence stored in a memory device. When executing such an instruction sequence, prior to the execution of a branch instruction, an instruction stored in an address of the memory device designated by an address to which the branching is to be made, and an instruction following the branch instruction are prefetched and after executing the branch instruction, an instruction to be executed next to an instruction which became evident as a result of executing the branch instruction is used to actuate a processor. Such a system is disclosed in US—A—4,200,927. This system is constructed such that even when two branch instructions serially included in the instruction sequence are executed, the prefetching of these two instructions is possible. More particularly where a branch instruction, which controls that the control should be transferred to one of two directions appears twice during the prefetching operation, for the purpose of executing instruction sequences in three directions (that is an instruction sequence already executed, an instruction sequence of the two branch sequences which were branched in the success side according to the first branch instruction, and an instruction sequence branched in the success side in accordance with the second branching operation) the system is constructed such that the instructions in the three sequences can be prefetched and stored in three independent instruction buffers. With this construction, however, since prefetchings are performed in three directions, as the number of times of accessing to the memory device increases, the processing speed of the system decreases. Also as shown in US—A—3,723,976, a system has been proposed to use a Cache memory device for the purpose of increasing the processing speed of the system so as to prefetch from a main memory device instructions in three directions for storing the prefetched instructions. This system, however, is also required to store in the Cache memory device information not used in the main memory device during the executing operation so that information that are used frequently would be transferred from the Cache memory device to the main memory device. Consequently, the percentage of storing in the Cache memory device data desired by a central processing unit (CPU) decreases, thus failing by decreasing the processing speed of the system.

A data processing system as mentioned initially is known from IBM Technical Disclosure Bulletin, Vol. 25, No. 1, June 1982, pages 99 to 101. However, this publication only discloses the basic idea for a branch prediction based on past history branch history tables without disclosing the structure of such a system.

Accordingly, it is a principal object of this invention to provide an improved data processing system capable of executing an improved branch instruction prefetching processing.

Another object of this invention is to provide a novel data processing system capable of preventing decrease in the processing speed of the system.

Still another object of this invention is to provide a data processing system capable of suitably branch instruction prefetching processing by applying the invention to a pipe line control system.

To accomplish these and other objects, according to this invention, the fact that the directions of the branch instructions contained in a given instruction program are not symmetrical is used.

The data processing system according to the invention is characterized in that said memory means includes at least one block corresponding to at least one block of said buffer memory means for storing a branch direction information obtained by execution of a branch instruction in a block corresponding to the block containing said branch instruction of said buffer memory means; preceding control means including means for reading out from said branch direction control memory means a branch direction information and for reading out from said buffer memory means an instruction to be prefetched, means for predicting whether a branching will be successful or not based on the branch direction information stored in said branch direction control memory means and means responsive to the result of said prediction for prefetching an instruction in a direction having a highest probability of being executed succeeding to a branch instruction; an instruction register storing instruction; calculating means for calculating a real address by using the instruction data stored in said instruction register and under control of said preceding control means; branch address buffer memory means which stores a branch instruction address signal formed in response to an output of said branch direction control memory means; and comparator means comparing an output of said calculating means with the output of said branch instruction buffer memory means for producing a signal controlling said preceding control means.

A further development of the data processing system according to the invention is characterized in that said buffer memory means and said branch direction control memory means respectively store data and address information.

According to a further feature the data processing system according to the invention comprises an instruction buffer memory means which temporarily stores instructions read out from said buffer memory means.

A further feature according to the data processing system according to the invention resides in that said buffer memory means comprises first and second memory means, said first memory means being used for an instruction and said second memory means being used for an operand.

Embodiments of the invention will be explained in detail below with reference to the accompanying drawings, wherein

Figure 1 is a block diagram showing a first embodiment of this invention;

Figure 2 is a block diagram showing a preceding controller 10 shown in Figure 1;

Figure 3 is a block diagram showing the comparison and judging circuit shown in Figure 1;

Figure 4 is a timing chart useful to explain the operation of the first embodiment shown in Figure 1;

Figure 5 is a block diagram showing a second embodiment of this invention;

Figure 6 is a timing chart useful to explain the operation of the second embodiment shown in Figure 5; and

Figure 7 is a flow chart for explaining the operation of the preceding controller 10 shown in Figure 5.

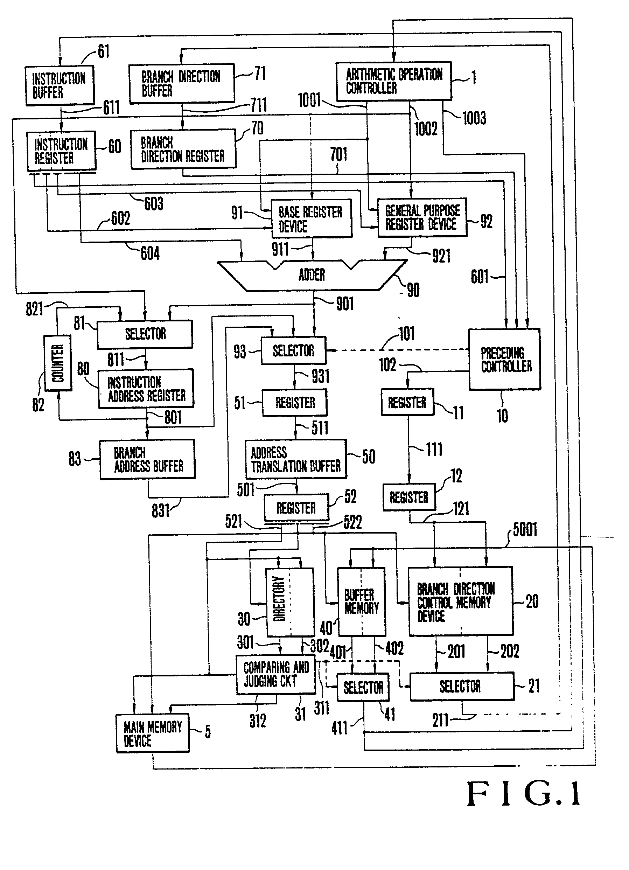

Figure 1 illustrates a first embodiment of the branch instruction prefetching system according to this invention which comprises an arithmetic operation controller 1, a main memory device 5, a preceding controller 10, registers 11 and 12, a branch direction control memory device 20, a selector 21, a directory 30, a comparing and judging circuit 31, a buffer memory device 40, a selector 41, an address translation buffer 50, registers 51 and 52, an instruction register 60, an instruction buffer 61, a branch direction register 70, a branch direction buffer 71, an instruction address register 80, a selector 81, a counter 82, a branch address buffer 83, an adder 90, a base register device 91, a general purpose register device 92 and a selector 93.

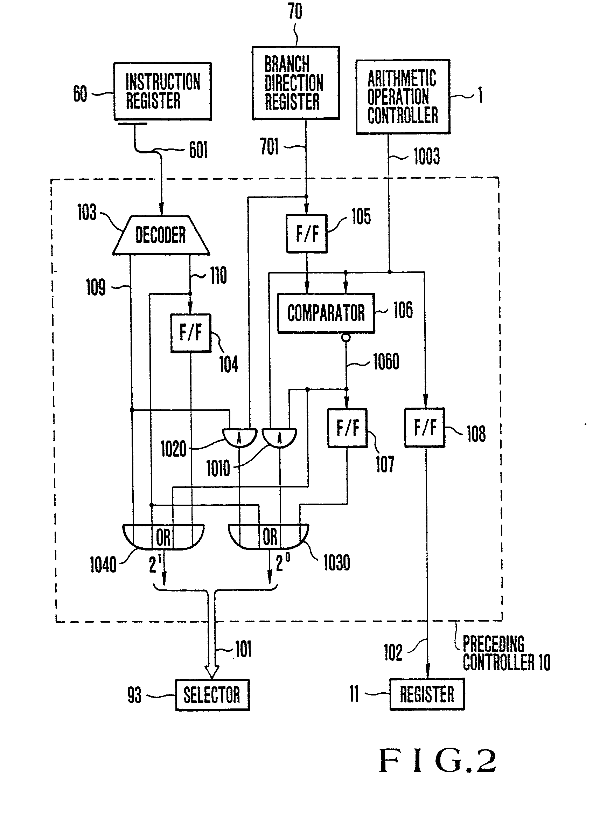

Figure 2 shows the detail of the preceding controller 10 which comprises a decoder 103 decoding an operation code from an instruction register 60 for applying a signal to a line 109 when the instruction is a branch instruction, but to a line 110 when the instruction is not the branch instruction; a flip-flop circuit 104 for storing the signal from the line 110 showing that the signal is not a branch instruction; a flip-flop circuit 105 storing a signal 701 from a branch direction register 70; a comparator 106 that compares a branch direction determining signal 701 with a signal 1003 from the arithmetic operation controller; a flip-flop circuit 107 that stores a signal 1060 produced when the result of comparison of the comparator 106 shows a noncoincidence; a flip-flop circuit 108 storing the signal 1003; AND gate circuits 1010, 1020 and OR gate circuits 1030, 1040. When signal 1060 is at a logic "0" it means an unsuccessful branching, whereas at a logic "1" it means a successful branching. Further when the states of signals 1003, 102 and the flip-flop circuit 108 are "0", they show unsuccessful branching whereas when they are "1", they show successful branching. Signal 101 is a two digit binary signal. Thus, when it is "00", it indicates a not yet used state, "01" indicates a signal that selects a signal 831 from the branch address buffer 83, "10" designates selection of an instruction signal 801 from the instruction address register 80, while "11" designates selection of the result of addition 901 of adder 90.

The address translation/buffer 50 is described in detail as a translation directory in US—A—3,723,976.

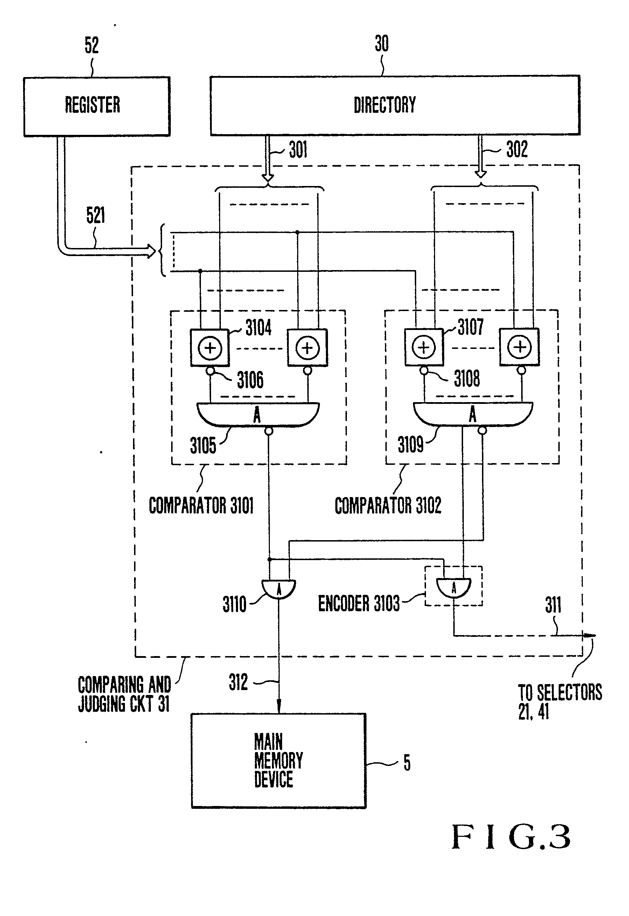

Figure 3 shows the detail of the comparing and judging circuit 31 shown in Figure 1. As shown, it comprises comparators 3101 and 3102 respectively comparing address informations 301 and 302 from the directory 30, an encoder 3103 which encodes based on the results of comparisons of the comparators 3101 and 3102 for outputting selection designation signals for selectors 21 and 41 shown in Figure 1 and an AND gate circuit 3110 which obtains a logic product of the results of comparisons of the comparators 3101 and 3102 for forming an access signal 312 for the main memory device 5 when desired data is not present in the buffer memory device 40. The comparators 3101 and 3102 are respectively constituted by exclusive-OR gate circuits 3104 and 3107, inverters 3106 and 3108, and AND gate circuits 3105 and 3109.

In this embodiment, the buffer memory device 40 is constituted by two columns and the address translation 50 is located in the preceding stage of the buffer memory device 40. Since the control of the buffer memory device 40 is immaterial to this invention, its detailed description will not be made.

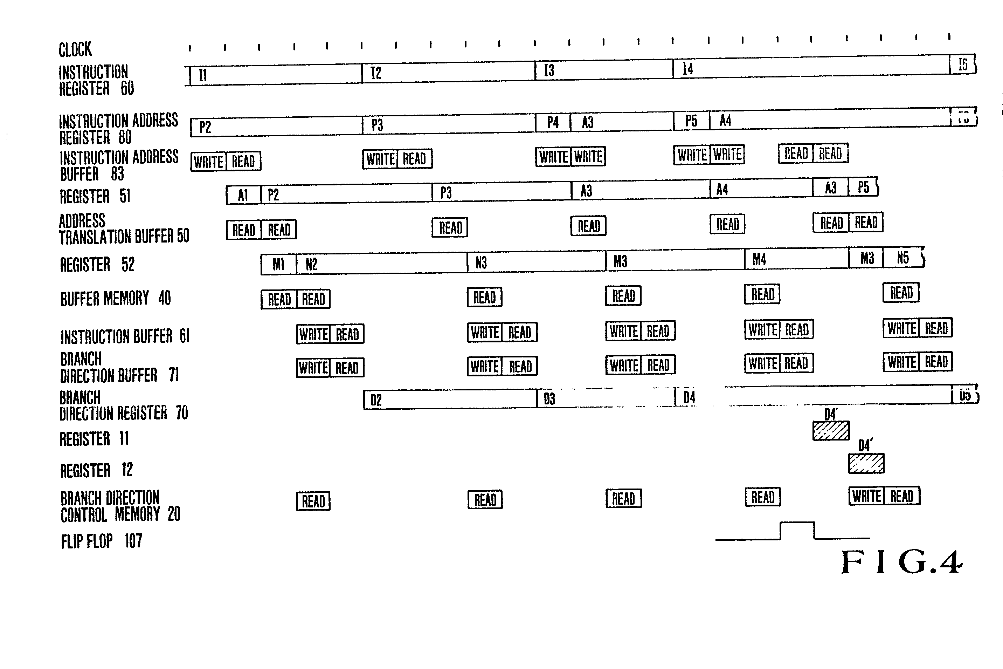

The operation of this invention will now be described with reference to Figure 4. Where an instruction code I1 in the instruction register 60 is an instruction other than a branch instruction, the preceding controller 10 produces a selection signal on line 101 that instructs the selector 93 to select an operand address A1 applied thereto from adder 90 over line 901. The operand address A1 is sent to the address translation 50 via the selector 93 and register 51. The address M1 transferred by the address translation/buffer 50 is stored in register 52. According to the designation of the address M1, an operand data is read out from the buffer memory device 40 and then sent to the arithmetic operation controller 1.

After an operand data has been supplied to the arithmetic operation controller 1 from the buffer memory device 40, the content of the instruction address register indicative of an instruction address P2 to be prefetched is supplied to the address translation 50 via the selector 93 and the register 51. An instruction to be executed next and read out from the buffer memory device 40 according to the designation by an address signal N2 from the address translation 50 is stored in the instruction buffer 61 via the instruction selector 41. At the same time, a branch direction information D2 corresponding to a block including that instruction is read out from the branch direction control memory device 20 and then stored in the branch direction buffer 71 via the selector 21. After completion of the execution of an instruction from the arithmetic operation controller 1 an instruction I2 to be executed next is taken out from the instruction buffer 61 and then stored in the instruction register 60 and the content P2 of the instruction address register 80 is updated by a +2/4/6/8 counter 82 to form an address signal P3. Then, when the instruction code I2 in the instruction register 60 shows a branch instruction the preceding controller 10 performs the following controls. Namely, when the content D2 of the branch direction register 70 shows an unsuccessful branching, in other words shows that the instruction continues in the same direction as the preceding instructions, the preceding controller 10 performs the same operation as for a non-branching operation so as to prefetch an instruction I3 to be executed next and a branch direction information D3 from the address P3 shown by the instruction address register 80. When an instruction I3 to be executed next is a branch instruction and when the content D3 of the branch direction register 70 shows a successful branching, that is the flow of the instruction is not changed, an address signal A2 calculated by the adder 90, given via the line 901 and indicative of an address toward which the branching is to be made will be applied to the address translation 50 via the selector 93 and the register 51, and the address signal translated in the buffer 50 is stored in the register 52. In accordance with the designation of this address signal M3, an instruction I4 showing an address to which the branching is to be made is read out from the buffer memory device 40.

The instruction I4 read out from the buffer memory device 40 is then stored in the instruction buffer memory device 61 via the selector 41, and a branch direction information D4 corresponding to a block including the instruction I4 is read out from the branch direction control memory device 20 and then stored in the branch direction buffer 71.

More particularly, applied to the instruction register the preceding controller 10 judges that there is a large probability of branching in the same direction as before according to the content of the branch direction register 70 showing the branch direction (successful or unsuccessful) at the time when the same instruction was executed before so as to determine which one of the branch address indicated by the branch instruction, or the output of the adder 90 and the content of the instruction address register 80 should be used, thus prefetching an instruction.

Furthermore, in the preceding controller 10, when a branch instruction is supplied to the instruction register 60, while an address signal indicative of the branch instruction is still remaining in the instruction address register 80, the content thereof is stored in the instruction buffer 83 as a copy thereof and held in the instruction buffer until completion of the execution of the branch instruction. When the arithmetic operation controller 1 has executed the branch instruction and the correct branch direction is determined, a branch direction correct determination signal 1003 is applied to the preceding controller 10 which checks whether a prefetched instruction stored in the instruction buffer 61 is an instruction in the same direction as the finally determined branch direction or not.

This operation will be described with reference to Figure 2. The branch direction information of the instruction I4 prefetched in the instruction buffer 61 shown in Figure 1 is stored in the branch direction register 70. This information is stored in the flip-flop circuit 105 via line 701. The content of this flip-flop circuit 105 is compared with the correct branch direction determination signal given from the arithmetic operation controller 1 via line 1003 with comparator 106 so as to perform the check described above. When the result of comparison is a noncoincidence, that is when the branch directions are different, a noncoincidence signal would be stored in the flip-flop circuit 107 via line 1060.

As a result of comparison, when it was found that the branch directions are different, for the purpose of nullifying the prefetched instruction I5 and of again reading out an instruction, the following operation is performed.

Thus, an address signal A3 read out from the instruction address buffer 83 is applied to the address translation 50 via the register 51. In response to the address signal A3 thus applied, an address signal M3 is read out from the buffer 50 and is then applied to the register 52, and a branch direction information D4' determined by the register in response to the designation of the address signal M3 from the register 52 is written into the branch direction control memory device 20.

As above described, each time a branch instruction is executed, the results regarding the branchings are stored in the branch direction control memory device 20, and where the instruction to be prefetched is a branch instruction, according to a branch direction information read out at the time of prefetching, the prefetching of the instruction can be made only in an effective direction.

When the system of this invention is applied to a pipe line control system, for example, the probability of success of the branching amounts to 90% on the average, thus making it possible to increase the speed of processing over the prior art Cache system while maintaining a high probability.

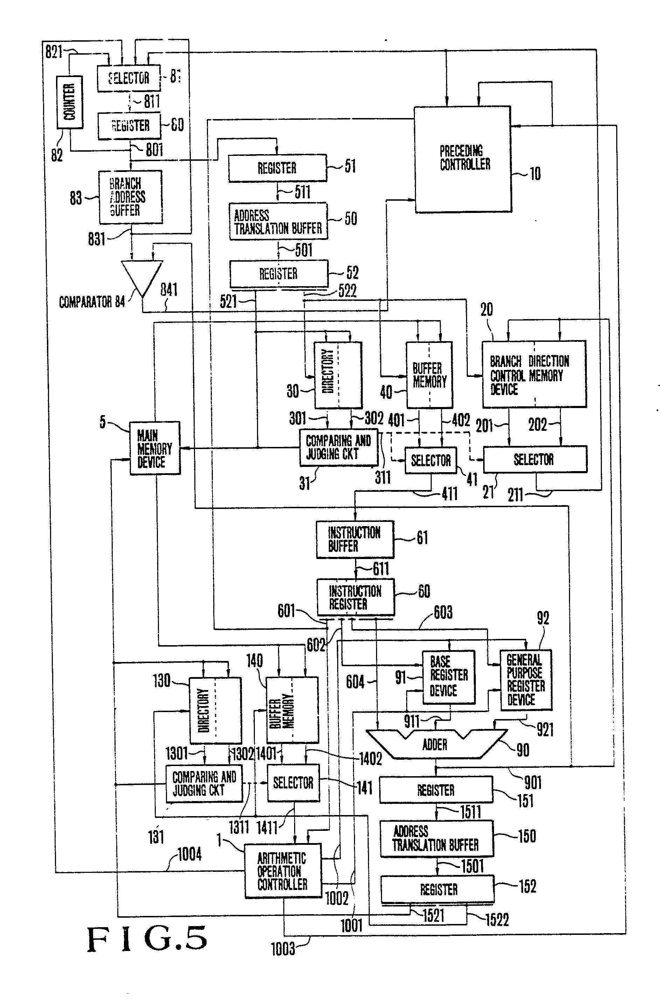

A second embodiment of this invention will be described hereunder with reference to Figures 5, 6 and 7 in which circuit elements identical to those shown in the previous embodiment are designated by the same reference characters.

The modification shown in Figure 5 is identical to the embodiment shown in Figure 1 except the following details. Firstly, to the first embodiment is added a comparator 84 which compares the output of the branch address buffer 83 and the result of addition of the adder 90 sent over line 901. Secondly, the directory 30, buffer memory 40 and address translation 50 of the first embodiment are each divided for operand and instruction. Thus, there are provided two directories 30 and 130, two buffer memories 40 and 140, and two address translation buffers 50 and 150. Circuitries associated therewith 31, 131, 141, 52 and 152 are also added.

Thirdly, while in the first embodiment, the preceding controller 10 is constituted by a logic circuit in the second embodiment, the preceding controller is constructed to perform a microinstruction control as disclosed in US—A—3,991,404, US—A—3,494,372 and US—A—3,872,447.

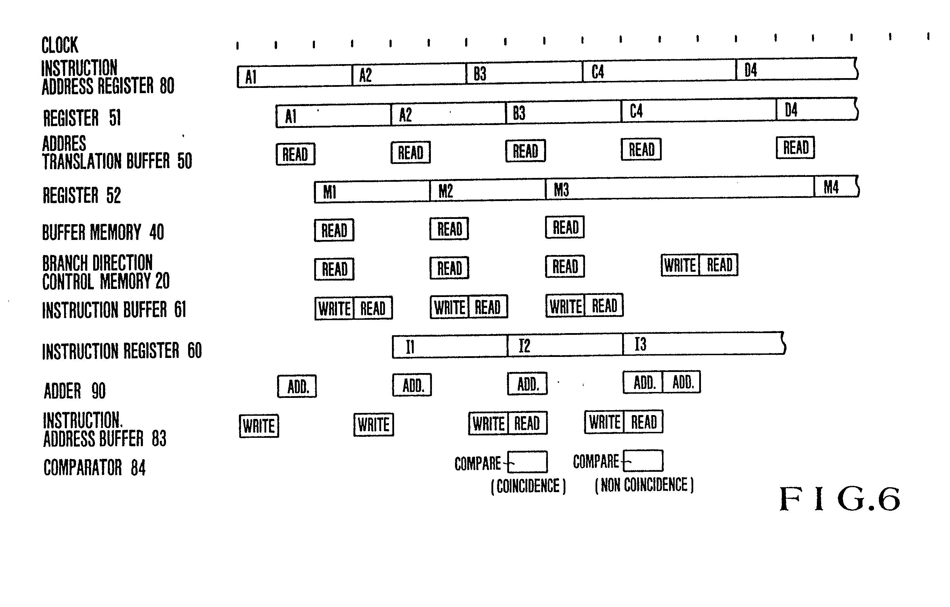

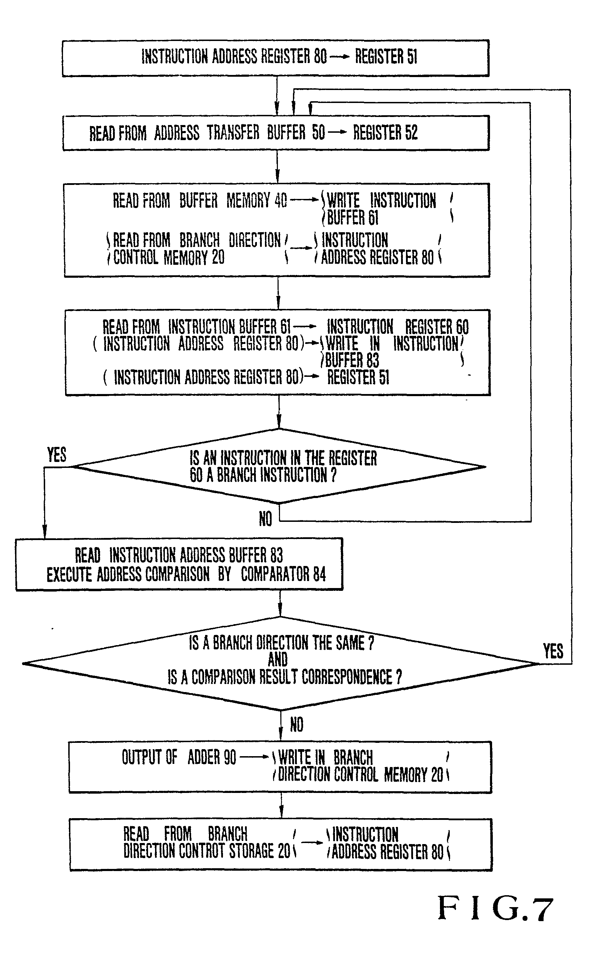

Details of the operation of the second embodiment will now be described. The control is effected by a microinstruction control shown in Figure 7. As shown in Figures 5 and 6, before executing an instruction, an instruction is read out from the buffer memory device 40. At this time, when a desired instruction is not stored in this buffer memory device 40, such instruction is fetched from the main memory device 5 and stored in the buffer memory device 40. Concurrently therewith, an address signal of an instruction at a position next to the desired instruction in the instruction stream is provided by the adder 90 and stored in the branch direction control memory device 20.

Referring now to Figures 5, 6 and 7, for the purpose of prefetching an instruction, the content A1 of the instruction address register 80 is applied to the address translation 50 via register 51. In response to the designation of this logic address signal A1, a real address M1 is read out from the buffer 50 and stored in register 52. In accordance with the real address M1 from the register 52, an instruction word I1 is read out from the buffer memory device 40 and then stored in the instruction buffer 61 via the selector 41. At the same time, in response to the designation of the real address M1 from the register 52, a branch direction information (instruction address) A2 is read out from the branch direction control memory device 20 and stored in the register 80 via the selector 81. Then, the content I1 of the instruction buffer 61 is read out and stored in the instruction register 60. This instruction I1 is sent to the preceding controller 10 together with a signal from the arithmetic operation controller 1 to be checked as to whether it is a branch instruction or not. Since the instruction I1 is not a branch instruction, the preceding controller 10 controls various circuitries to operate as follows. More particularly, the content A2 of the instruction address register 80 is applied to the address translation 50 via the register 51. In response to the designation of this logic address A2, a real address M2 is read out from the buffer 50 and stored in the register 52, and in response to the designation of the real address M2 from the register 52, an instruction word I2 is read out from the buffer memory device 40 and then stored in the instruction buffer 61 via the selector 41. Concurrently therewith, in response to the designation of the real address M2 from the register 52, a branch direction information (instruction address) B3 is read out from the branch direction control memory device 20 and stored in the register 80 via the selector 81. Thereafter, the contents B3 of the register 80 is stored in the instruction address buffer 83, and the content I2 of the instruction buffer 61 is read out and stored in the instruction register 60. This instruction I2 is sent to the preceding controller 10 together with a signal from the arithmetic operation controller 1 to be checked as to whether it is a branch instruction or not. Since the instruction I2 is a branch instruction, the preceding controller 10 controls various circuitries to operate as follows. Firstly, a displacement from the register 60, and contents respectively read out from of the base register device 91 and the general register device 92 are added together by adder 90. The result of addition, that is an address to which the branching is to be made is compared with a predicted address to which the branching is to be made, the address being read out from the instruction address buffer 83, and the result of branch is applied to the preceding controller 10. In response to an operand code applied from the register 60 over line 61, at the arithmetic operation controller 1, a check is made as to whether the branching is successful or not. The result of check is applied to the preceding controller 10 from the arithmetic operation controller 1 over line 1003. When the preceding controller 10 judges that the compared signals coincide with each other and that the checked direction is the same as the predicted direction, it is determined that the predicted branch direction was correct. Concurrently with this judging, an address signal B3 is given to the address translation 50 from the register 80 through the register 51. In the buffer 50, the address logic B3 is translated into a real address M3, and the real address M3 is stored in the register 52 based on the result of judgement. According to the designation of the real address M3, an instruction I3 is read out from the buffer memory device 40 and stored in the instruction buffer memory device 61 via the selector 41. In response to the designation of the real address M3 from the register 52, an address C4 to which the branching is to be made is read out from the branch direction control memory device 20 and is then stored in the instruction address register 80 via selectors 21 and 81. The content C4 of the register 80 is stored in the instruction address buffer 53. On the other hand, the instruction I3 from the instruction buffer 61 is set in the instruction register 60. This instruction I3 is sent to the preceding controller 10 together with a signal from the arithmetic operation controller 1 to be checked whether there is a branch instruction or not. Since the instruction I3 is a branch instruction, the preceding controller 10 controls various circuitries to operate as follows. At first, a displacement from the register 60 and contents respectively read out from the base register device 91 and the general register device 92 are added together in the adder 90. The result of addition, that is an address to which the branching is to be made is compared with a predicted address B3 to which the branching is to be made, the address B3 being read out from the instruction address buffer 83, and the result of comparison is sent to the preceding controller 10. In response to the operand code supplied from the register 60 to the preceding controller 10 over line 601, the arithmetic operation controller 1 checks whether the branching is successful or not. The result of this check is supplied to the preceding controller 10 from the arithmetic operation controller 1 over line 1003. When the preceding controller 10 judges that the result of comparison is a noncoincidence, or the result of the check shows that the direction is different from the predicted direction, it is judged that the predicted branching was not correct. At the same time, an address signal C4 is sent to the address translation 50 via the register 51. At the time of the instruction I3, the result of comparison shows a noncoincidence. This shows that the predicted branching was not correct so that the signal transfered by the address translation 50 would not be stored in the register 52. Accordingly, the content M3 of the register 52 is applied at the branch direction control memory device 20 as an address signal to store therein the result of addition D4 supplied thereto from the adder 90 over line 901. This addition operation is performed in the same manner as the addition operation described above. Then, the content D4 of the branch control memory device 20 which has been stored immediately before is read out and stored in the instruction address register 80 via selectors 21 and 81. Thereafter, the succeeding prefetching operation is executed.

As above described, by storing an address to which the branching is to be made together with a branch direction, prefetching is possible without predecoding a prefetched instruction and without address calculation so that even when it is necessary to prefetch at a high speed it is not necessary to provide in duplicate an address adder, and it is not necessary to wait until the contents of a general purpose register GR and a register BR are determined which are necessary when calculating addresses. Although the invention has been described in terms of preferred embodiments, it should be understood that the invention is not limited to these specific embodiments and that many changes and modifications will be obvious to one skilled in the art without departing from the scope of the invention as defined in the appended claims.

**Claims**

1. A data processing system having branch instruction prefetching means, said system comprising:

— main memory means (5) for storing information;
— buffer memory means (30, 40; 130, 140) having a plurality of blocks for holding a copy of a portion of the information stored in said main memory means (5) in each block unit;
— arithmetic operation control means (1) executing instructions including a branch instruction;
— branch direction control memory means (20) characterized in that said memory means (20) includes at least one block corresponding to at least one block of said buffer memory means (30, 40; 130, 140) for storing a branch direction information obtained by execution of a branch instruction in a block corresponding to the block containing said branch instruction of said buffer memory means (30, 40; 130, 140);
— preceding control means (10) including means for reading out from said branch direction control memory means (20) a branch direction information and for reading out from said buffer memory means (30, 40; 130, 140) an instruction to be prefetched, means for predicting whether a branching will be successful or not based on the branch direction information stored in said branch direction control memory means (20) and means responsive to the result of said prediction for prefetching an instruction in a direction having a highest probability of being executed succeeding to a branch instruction;
— an instruction register (60) storing instruction;
— calculating means for calculating a real address by using the instruction data stored in said instruction register (60) and under control of said preceding control means (10);
— branch address buffer memory means (83) which stores a branch instruction address signal formed in response to an output of said branch direction control memory means (20); and
— comparator means (84) comparing an output of said calculating means with the output of said branch instruction buffer memory means for producing a signal controlling said preceding control means (10).

2. The data processing system according to Claim 1 wherein said buffer memory means (30, 40; 130, 140) and said branch direction control memory means (20) respectively store data and address information.

3. The data processing system according to Claim 1 or 2 which further comprises an instruction buffer memory means (61) which temporarily stores instructions read out from said buffer memory means (30, 130; 40, 140).

4. The data processing system according to any of Claims 1 to 3, wherein said buffer memory means (30, 130; 40, 140) comprises first and second memory means, said first memory means being used for an instruction and said second memory means being used for an operand.

**Patentansprüche**

1. Datenverarbeitungssystem mit Sprunginstruktionsvorgriff, wobei das System folgendes aufweist:

— eine Hauptspeichereinrichtung (5) zum Speichern von Informationen;

— eine Pufferspeichereinrichtung (30, 40; 130, 140) mit einer Vielzahl von Blöcken zum Behalten einer Kopie eines Teiles der in der Hauptspeichereinrichtung (5) gespeicherten Information in jeder Blockeinheit;

— eine Rechenoperations-Steuereinrichtung (1), die Befehle einschließlich eines Sprungbefehls ausführt;

— eine Sprungrichtungssteuerung-Speichereinrichtung (20), dadurch gekennzeichnet, daß die Speichereinrichtung (20) mindestens einen Block aufweist, der mindesten einem Block der Pufferspeichereinrichtung (30, 40; 130, 140) entspricht, um eine Sprungrichtungsinformation zu speichern, die durch Ausführung eines Sprungbefehls in einem Block erhalten worden ist, der dem Block entspricht, welcher den Sprungbefehl der Pufferspeichereinrichtung (30, 40; 130, 140) enthält;

— eine Prioritätssteuereinrichtung (10), die eine Einrichtung, um aus der Sprungrichtungssteuerungs-Speichereinrichtung (20) eine Sprungrichtungsinformation auszulesen und um aus der Pufferspeichereinrichtung (30, 40; 130, 140) einen im Vorgriff zu nehmenden Befehl auszulesen, eine Einrichtung zum Vorhersagen, ob eine Verzweigung erfolgreich sein wird oder nicht, auf der Basis der Sprungrichtungsinformation, die in der Sprungrichtungssteuerungs-Speichereinrichtung (20) gespeichert ist, und eine Einrichtung aufweist, die auf das Resultat der Vorhersage anspricht, um einen Befehl in einer Richtung mit Vorgriff zu behandeln, welche die höchste Wahrscheinlichkeit hat, im Anschluß an einen Sprungbefehl ausgeführt zu werden;

— ein Befehlsregister (60), das Befehle speichert;

— eine Recheneinrichtung zum Bereichnen einer realen Adresse unter Verwendung der Befehlsdaten, die in dem Befehlsregister (60) gespeichert sind, und unter der Steuerung der Prioritätssteuereinrichtung (10);

— eine Sprungadressen-Pufferspeichereinrichtung (83), die ein Sprungbefehl-Adressensignal speichert, das in Abhängigkeit von einem Ausgangssignal der Sprungrichtungssteuerung-Speichereinrichtung (20) gebildet wird; und

— eine Vergleichseinrichtung (84), welche ein Ausgangssignal der Recheneinrichtung mit dem Ausgangssignal der Sprungbefehl-Pufferspeichereinrichtung vergleicht, um ein Signal zu erzeugen, welches die Prioritätssteuereinrichtung (10) steuert.

2. Datenverarbeitungssystem nach Anspruch 1, wobei die Pufferspeichereinrichtung (30, 40; 130, 140) und die Sprungrichtungssteuerungs-Speichereinrichtung (20) jeweils Daten und Adresseninformation speichern.

3. Datenverarbeitungssystem nach Anspruch 1 oder 2, das weiterhin eine Befehlspufferspeichereinrichtung (61) aufweist, das zeitweilig Befehle speichert, die aus der Pufferspeichereinrichtung (30, 130; 40, 140) ausgelesen werden.

4. Datenverarbeitungssystem nach einem der Ansprüche 1 bis 3, wobei die Pufferspeichereinrichtung (30, 130; 40, 140) erste und zweite Speichereinrichtungen aufweist, wobei die erste Speichereinrichtung für einen Befehl verwendet wird und die zweite Speichereinrichtung für einen Operanden verwendet wird.

**Revendications**

1. Système de traitement de données comportant un moyen de recherche préalable d'instructions de branchment, ce système comprenant:

un moyen de mémoire principale (5) pour stocker des informations;

un moyen de mémoire tampon (30, 40; 130, 140) ayant une multitude de blocks pour maintenir une copie d'une partie de l'information stockée dans le moyen de mémoire principale (5) dans chaque unité de bloc;

un moyen de commande d'opérations arithmétiques (1) exécutant des instructins comprenant une instruction de branchement;

un moyen de commande du sens de branchement (20); caractérisé en ce que le moyen de mémoire (20) comporte au moins un bloc correspondant à au moins un bloc du moyen de mémoire tampon (30, 40; 130, 140) pour stocker une information sur le sens de branchment obtenue par exécution d'une instruction de branchement dans un bloc correspondant au bloc contenant l'instruction de branchement du moyen de mémoire tampon (30, 40; 130, 140);

un moyen de commande précédent (10) comportant un moyen pour lire dans le moyen de mémoire de commande du sens de branchement (20) une information sur le sens de branchement et pour lire dans le moyen de mémoire tampon (30, 40; 130, 140) une instruction devant être pré-recherchée, un moyen pour prédire si un branchement sera réussi ou non sur la base de l'information sur le sens de branchement stockée dans le moyen de mémoire de commande du sens de branchement (20) et un moyen répondant au résultat de la prévision pour pré-rechercher une instruction dans un sens ayant la probabilité la plus élevée d'être exécutée à la suite d'une instruction de branchement;

un registre d'instructions (60) stockant des instructions;

un moyen de calcul pour calculer une adresse réelle par utilisation de la donnée d'instruction stockée dans le registre d'instructions (60) et sous la commande du moyen de commande précédent (10);

un moyen de mémoire tampon d'adresses de branchement (83) qui stocke un signal d'adresse d'instructions de branchement formé en réponse à une sortie du moyen de mémoire de commande du sens de branchement (20); et

un moyen comparateur (84) comparant une sortie du moyen de calcul à la sortie du moyen de mémoire tampon d'instructions de branchement afin de produire un signal commandant le moyen de commande précédent.

2. Système de traitement de données selon la revendication 1, dans lequel le moyen de mémoire tampon (30, 40; 130, 140) et le moyen de mémoire de commande du sens de branchement (20) stockent respectivement des données et une information d'adresse.

3. Système de traitement de données selon la revendication 1 ou la revendication 2, qui comprend en outre un moyen de mémoire tampon d'instructions (61) qui stocke temporairement des instructions lues dans le moyen de mémoire tampon (30, 130; 40, 140).

4. Système de traitement de données selon l'une quelconque des revendications 1 à 3, dans lequel le moyen de mémoire tampon (30, 130; 40, 140) comprend des premier et second moyens de mémoire, le premier moyen de mémoire étant utilisé pour une instruction et le second moyen de mémoire étant employé pour un opérande.

F I G.1

FIG.2

0 101 759

FIG.3

CLOCK

INSTRUCTION REGISTER 60 — I1 | I2 | I3 | I4 | I5

INSTRUCTION ADDRESS REGISTER 80 — P2 | P3 | P4 | A3 | P5 | A4 | I5

INSTRUCTION ADDRESS BUFFER 83 — WRITE READ | WRITE READ | WRITE WRITE | WRITE WRITE | READ READ

REGISTER 51 — A1 | P2 | P3 | A3 | A4 | A3 | P5

ADDRESS TRANSLATION BUFFER 50 — READ READ | READ | READ | READ | READ READ

REGISTER 52 — M1 | N2 | N3 | M3 | M4 | M3 | N5

BUFFER MEMORY 40 — READ READ | READ | READ | READ | READ

INSTRUCTION BUFFER 61 — WRITE READ | WRITE READ | WRITE READ | WRITE READ | WRITE READ

BRANCH DIRECTION BUFFER 71 — WRITE READ | WRITE READ | WRITE READ | WRITE READ | WRITE READ

BRANCH DIRECTION REGISTER 70 — D2 | D3 | D4 | D5

REGISTER 11 — D4'

REGISTER 12 — D4'

BRANCH DIRECTION CONTROL MEMORY 20 — READ | READ | READ | READ | WRITE READ

FLIP FLOP 107

F I G.4

F I G.5

0 101 759

CLOCK

INSTRUCTION ADDRESS REGISTER 80 | A1 | A2 | B3 | C4 | D4

REGISTER 51 | A1 | A2 | B3 | C4 | D4

ADDRES TRANSLATION BUFFER 50 | READ | READ | READ | READ | READ

REGISTER 52 | M1 | M2 | M3 | M4

BUFFER MEMORY 40 | READ | READ | READ

BRANCH DIRECTION CONTROL MEMORY 20 | READ | READ | READ | WRITE READ

INSTRUCTION BUFFER 61 | WRITE READ | WRITE READ | WRITE READ

INSTRUCTION REGISTER 60 | I1 | I2 | I3

ADDER 90 | ADD. | ADD. | ADD. | ADD. | ADD.

INSTRUCTION. ADDRESS BUFFER 83 | WRITE | WRITE | WRITE READ | WRITE READ

COMPARATOR 84 | COMPARE (COINCIDENCE) | COMPARE (NON COINCIDENCE)

FIG.6

INSTRUCTION ADDRESS REGISTER 80 → REGISTER 51

READ FROM ADDRESS TRANSFER BUFFER 50 → REGISTER 52

READ FROM BUFFER MEMORY 40 → { WRITE INSTRUCTION BUFFER 61 }

{ READ FROM BRANCH DIRECTION CONTROL MEMORY 20 } → { INSTRUCTION ADDRESS REGISTER 80 }

READ FROM INSTRUCTION BUFFER 61 → INSTRUCTION REGISTER 60
( INSTRUCTION ADDRESS REGISTER 80 ) → { WRITE IN INSTRUCTION BUFFER 83 }
( INSTRUCTION ADDRESS REGISTER 80 ) → REGISTER 51

IS AN INSTRUCTION IN THE REGISTER 60 A BRANCH INSTRUCTION ?

YES

NO

READ INSTRUCTION ADDRESS BUFFER 83
EXECUTE ADDRESS COMPARISON BY COMPARATOR 84

IS A BRANCH DIRECTION THE SAME ?
AND
IS A COMPARISON RESULT CORRESPONDENCE ?

YES

NO

OUTPUT OF ADDER 90 → { WRITE IN BRANCH DIRECTION CONTROL MEMORY 20 }

READ FROM BRANCH DIRECTION CONTROT STORAGE 20 } → { INSTRUCTION ADDRESS REGISTER 80 }

FIG.7